# EUROPEAN PATENT APPLICATION

(11) **EP 2 450 250 A1**
(43) Date of publication of application: **09.05.2012**
(21) Application number: 10176623.6
(22) Date of filing: 14.09.2010
(51) Int. Cl.: B60T 17/22

(54) **Power supply for a goods wagon and train integrity system for a cargo train**

(71) Applicant: Thales Deutschland GmbH, 70435 Stuttgart (DE)
(72) Inventor: Klein, Roland, 74906, Grombach (DE)
(74) Representative: Kohler Schmid Möbus

(57) **Abstract**

A power supply (13) for a goods wagon (3) having a compressed-air brake (5) comprises a compressed-air line (4) for the compressed-air brake (5), a branch line (15) connected to the compressed-air line (4) and a generator (16) disposed in the branch line (15) for generating electric power from the compressed-air flow branched off from the compressed-air line (4). A train integrity system (10) for a cargo train (1) having a continuous compressed-air line (4) from the locomotive (2) to the last goods wagon (3) of the cargo train (1) comprises a train integrity base (11) provided in the locomotive (2) and train integrity modules (12) provided in at least several goods wagons (3), wherein the train integrity base (11) comprises a receiver (18) for receiving integrity data transmitted from the train integrity modules (12).

## Description

### Background of the invention

The invention relates to a power supply for a goods wagon having a compressed-air brake and also to a train integrity system for a cargo train having a continuous compressed-air line from the locomotive to the last goods wagon of the cargo train.

In passenger trains, the wagons are electrically coupled to each other and the information about the train integrity is available at the locomotive side at any time. A negative information about the train integrity results automatically in an emergency brake action of the train. This train integrity is a requirement for the European Train Control System ETCS Level 3.

In cargo trains, however, the goods wagons are not electrically coupled to each other and, therefore, there is no automatic information about the train integrity. The train integrity must be checked by the staff when the cargo train stops for a longer stay. A subsequent cabling of all goods wagons of the cargo train is not possible for cost reasons.

### Object of the invention

It is the object of the invention to provide an electric power supply for a goods wagon and to provide a train integrity system for a cargo train.

### Short description of the invention

This object is achieved, in accordance with the invention, by a power supply for a goods wagon having a compressed-air brake, comprising a compressed-air line for the compressed-air brake, a branch line connected to the compressed-air line, and a generator disposed in the branch line for generating electric power from the compressed-air flow branched off from the compressed-air line.

According to the invention, a small amount of compressed air provided in the compressed-air line of the compressed-air brake is used to drive the generator. The power supply can be operated without any battery and, thus, electric power is supplied as long as the compressed-air line is under pressure. Alternatively, a battery can be charged by the power supply to provide electric power even when the compressed-air line is not under pressure.

The invention also relates to a train integrity module for a goods wagon having a compressed-air brake, comprising a power supply as described above and a radio transmitter for transmitting integrity data to a train integrity base. The train integrity module is part of a train integrity system for a cargo train having a continuous compressed-air line from the locomotive to the last goods wagon of the cargo train.

According to the invention, the train integrity system comprises a train integrity base provided in the locomotive and train integrity modules as described above provided in at least several goods wagons, wherein the train integrity base comprises a receiver for receiving integrity data transmitted from the train integrity modules. As long as the compressed-air line of a goods wagon is under pressure the related train integrity module is provided with electric power and transmits integrity data to the train integrity base. When the compressed-air line is not under pressure no electric power for the radio transmitter is generated by the power supply resulting in that the radio transmitter does not transmit any integrity data to the train integrity base.

Preferably, the train integrity base causes an emergency brake action of the cargo train in case of receiving no integrity data from anyone of the train integrity modules anymore. Reasons for absence of integrity data could be the following:
- Pressure drop in the compressed-air line of the goods wagon due to a leakage of compressed-air line or the goods wagon being pulled off. All integrity modules are not provided with electric power anymore resulting in that no integrity data are transmitted to the train integrity base.
- Defective power supply:
   In case of a defective power supply, only the related train integrity module is not provided with electric power anymore resulting in that no integrity data of the related goods wagon are transmitted to the train integrity base.
- Emergency brake action:
   In case of a previous emergency brake action of the cargo train, the compressed-air line of the cargo train is not under pressure. All train integrity modules are not provided with electric power anymore resulting in that no integrity data are transmitted to the train integrity base.

With a cargo train comprising the automatic train integrity system according to the invention the integrity requirements of ETCS Level 3 can be met.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing, in which:
- Fig. 1: shows schematically a train integrity system of a cargo train according to the invention comprising a train integrity base provided in the locomotive and train integrity modules provided in the goods wagons;
- Fig. 2: shows schematically the structure of the train integrity module of Fig. 1; and
- Fig. 3: shows schematically the structure of the train integrity base of Fig. 1.

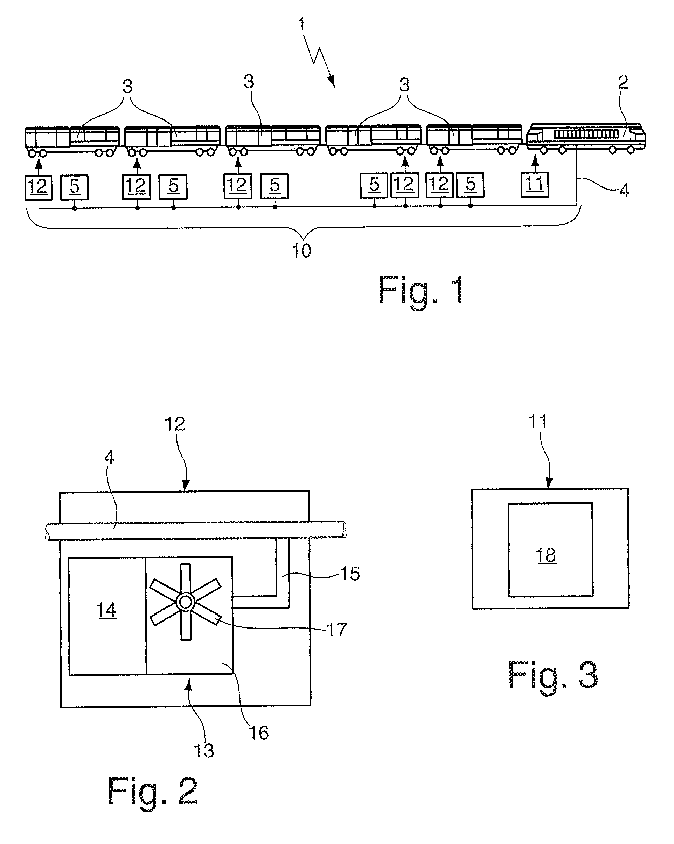

The cargo train **1** shown in **Fig. 1** comprises a locomotive **2,** a plurality of goods wagons **3** and a continuous compressed-air line **4** running from the locomotive 2 to the last goods wagon 3. Each goods wagon 3 comprises a compressed-air brake **5** connected to the compressed-air line 4.

The cargo train 1 is equipped with a train integrity system **10** comprising a train integrity base **11** provided in the locomotive 2 and train integrity modules **12** provided the goods wagons 3.

As shown in **Fig. 2****,** each train integrity module 12 comprises a power supply **13** and a radio transmitter **14** for continually transmitting integrity data to the train integrity base 11, the radio transmitter 14 being connected to the power supply 13. The power supply 13 comprises the compressed-air line 4, a branch line **15** connected to the compressed-air line 4 and a generator **16** disposed in the branch line 15 for generating electric power from the compressed-air flow branched off from the compressed-air line 4. A small amount of compressed air provided in the compressed-air line 4 is used to drive rotors **17** of the generator 16. As long as the compressed-air line 4 is under pressure the radio transmitter 14 is supplied with electric power by the generator 16 and, accordingly, integrity data are continually transmitted by the radio transmitter 14 to the train integrity base 11. When the compressed-air line 4 is not under pressure no electric power for the radio transmitter 14 is generated by the power supply 13 resulting in that the radio transmitter 14 does not transmit any integrity data to the train integrity base 11.

As shown in **Fig. 3****,** the train integrity base 11 comprises a receiver **18** for receiving integrity data transmitted from the radio transmitter 14 of the train integrity modules 12.

The train integrity base 11 causes automatically an emergency brake action of the cargo train 1 in case of receiving no integrity data from anyone of the train integrity modules 12 anymore. Reasons for absence of integrity data could be:
- a pressure drop in the compressed-air line 4,
- a defective power supply 13,
- a previous emergency brake action.

## Claims

1. Power supply (13) for a goods wagon (3) having a compressed-air brake (5), comprising:
a compressed-air line (4) for the compressed-air brake (5),
a branch line (15) connected to the compressed-air line (4), and
a generator (16) disposed in the branch line (15) for generating electric power from the compressed-air flow branched off from the compressed-air line (4).

2. Train integrity module (12) for a goods wagon (3) having a compressed-air brake (5), comprising a power supply (13) according to claim 1 and a radio transmitter (14) for transmitting integrity data to a train integrity base (11).

3. Train integrity system (10) for a cargo train (1) having a continuous compressed-air line (4) from the locomotive (2) to the last goods wagon (3) of the cargo train (1), comprising:
a train integrity base (11) provided in the locomotive (2), and
train integrity modules (12) according to claim 2 provided in at least several goods wagons (3),
wherein the train integrity base (11) comprises a receiver (18) for receiving integrity data transmitted from the train integrity modules (12).

4. Train integrity system according to claim 3, wherein train integrity modules (12) are provided in all goods wagons (3) of the cargo train (1).

5. Train integrity system according to claim 3 or 4, wherein the train integrity base (11) causes an emergency brake action of the cargo train (1) in case of receiving no integrity data from anyone of the train integrity modules (12) anymore.
